# EUROPEAN PATENT SPECIFICATION

(11) **EP 3 741 632 B1**
(45) Date of publication and mention of the grant of the patent: **06.09.2023**
(21) Application number: 19382408.3
(22) Date of filing: 21.05.2019
(51) Int. Cl.: B60S 1/52, B60S 1/54, B60S 1/56, F16K 11/02, F16K 31/126

(54) **DEVICE AND METHOD FOR WASHING A SURFACE OF A MOTOR VEHICLE PART AND FLUID CONTROL VALVE FOR SUCH DEVICE**
VORRICHTUNG UND VERFAHREN ZUM WASCHEN EINER OBERFLÄCHE EINES KRAFTFAHRZEUGTEILS UND FLUIDSTEUERVENTIL FÜR SOLCH EINE VORRICHTUNG
DISPOSITIF ET PROCÉDÉ DE NETTOYAGE D'UNE SURFACE D'UNE PARTIE D'UN VÉHICULE À MOTEUR ET SOUPAPE DE RÉGULATION DE FLUIDE POUR UN TEL DISPOSITIF

(43) Date of publication of application: 25.11.2020
(73) Proprietor: FICO TRANSPAR, S.A., 08028 Barcelona (ES)
(72) Inventor: MAURER, Géza Viktor, 08232 VILADECAVALLS (ES); ALCAIDE HERNÁNDEZ, Olallo, 08232 VILADECAVALLS (ES)
(74) Representative: ZBM Patents - Zea, Barlocci & Markvardsen

(56) References cited:
- EP-A1- 3 173 302
- EP-A1- 3 300 971
- DE-A1-102014 220 573
- DE-A1-102017 010 254
- US-A1- 2019 061 698

## Description

### BACKGROUND

Cleaning systems that eject two different fluids, such as for example liquid and air, onto a surface of a motor vehicle part, such as a camera lens, for cleaning said part and removing water droplets attached thereon are known in the art.

Document EP3105089, for example, discloses an air and liquid cleaning system for ejecting a cleaning liquid and air onto a vehicle vision device. The cleaning system comprises at least one liquid nozzle, at least one cleaning liquid pump fluidly connected to a fluid supply conduit and to a cleaning liquid source, at least one air nozzle, and at least one air jet generating means fluidly connected to the at least one air nozzle. The air jet generating means are hydraulically connected to the fluid supply conduit and the air jet generating means are operable by the fluid pressure from the cleaning fluid pump such that during a first operation time interval of the cleaning system only cleaning liquid is propelled onto the vehicle vision device or onto the vehicle sensor and that during a second operation time interval of the cleaning system only an air jet burst after the opening of a solenoid valve is propelled onto the vehicle vision device or onto the vehicle sensor.

Document EP3239006 discloses a foreign matter removal device comprising a cylinder in which air is introduced; a piston movably supported to the cylinder and configured to deliver air introduced into the cylinder as high-pressure air; a nozzle for injecting high-pressure air delivered by the piston towards an object to be washed; a spring for urging the piston, and a mechanism for moving the piston to a predetermined position by applying a force to the piston. The cylinder is provided with a piston support part for movably supporting the piston and a coupling protrusion having a delivery path configured to deliver high-pressure air to the nozzle.

US2019061698 discloses a cleaning apparatus comprising a fluid discharge portion, a gas discharge portion, a fluid tank, a fluid pump supplying the fluid in tank to the fluid discharge portion, a gas pump supplying gas to the gas discharge portion, a control unit controlling a driving state of each of the fluid pump and the gas pump, and a valve switchable between a closed position blocking gas passage and an open position opening gas passage.

Known prior art devices intended to eject liquid and air onto a surface to be washed involve the use of expensive valves, as solenoid valves, or other complex control elements which result in undesirable high costs and complexity.

### SUMMARY

The present disclosure refers to a device for washing a surface of a motor vehicle part, a fluid control valve for such device, and to a method for washing a surface of a motor vehicle part.

Although the present device, fluid control valve, and method are disclosed herein for washing a surface of a motor vehicle part, the present device, fluid control valve, and method are also suitable for removing water drops or a water layer from a surface of a motor vehicle part, such as for example a camera lens or any other parts. Water drops or a water layer may result from water remaining on said surface, e.g. after a washing operation, due to dew, water drops coming from the road or other car body parts during rainy weather, etc. This may be a problem in different situations as water drops may deteriorate visibility especially in extreme lighting conditions like night driving with headlight reflections. Large water drops, for example on a camera lens may hide great areas that are important for visibility. In vehicle cameras connected with shape-object recognition systems, efficiency of recognition may be greatly decreased due to blurriness caused by water on the camera lens.

The present fluid control valve comprises at least one first fluid channel and at least one second fluid channel. The second fluid channel is separate from the first fluid channel. Fluid channels refers herein to ducts, pipes, passageways, and the like through which a fluid, such as air or water, may be allowed to flow. The present fluid control valve may be configured as for example a four-way valve.

The present fluid control valve also comprises a valve member. The valve member is a membrane mechanism, suitably configured to be driven at least into two different positions:
- a closed position where the second fluid channel of the fluid control valve is closed when first fluid flows through said first fluid channel with a first fluid pressure higher than a predetermined valve element pressure plus a second fluid channel pressure, or
- an open position where the second fluid channel of the fluid control valve is open when no first fluid flows through said first fluid channel or when first fluid flows with a first fluid pressure lower than the predetermined valve member pressure plus the second fluid channel pressure.

In one example, said predetermined valve element pressure may be lower than 2 bar, and depending on the needs, preferably lower than 0.5 bar. In general, it may be preferred that the valve member is configured to be driven into an open position opening the second fluid channel when the first fluid pressure is lower than 0.3 bar when there is no second fluid flowing through the second fluid channel.

As used herein, predetermined valve element pressure refers to a pressure value required for closing the second fluid channel by the valve element if no pressure were acting in the second fluid channel. Therefore, the first fluid pressure should be greater than that required by the valve element so that it is changed in position to close the second fluid channel.

Biasing means, such as a compression spring or the like, are provided for biasing the valve member for closing the first fluid channel. The amount of the above mentioned first fluid pressure is preferably greater than that of a force applied by said biasing means for biasing the valve member plus the second fluid channel pressure so as to open the first fluid channel.

A device for washing a surface of a motor vehicle part is also disclosed herein. The present washing device comprises first and second fluid pumps. The first fluid pump is intended for supplying first fluid from a first fluid source to a fluid control valve as described above. The second fluid pump is intended for supplying a flow of a second fluid from a second fluid source to said fluid control valve.

At least one first fluid outlet and at least one second fluid outlet are provided. The first fluid outlet is intended for supplying first fluid from the fluid control valve to the motor vehicle part. The second fluid outlet is intended for supplying second fluid from the fluid control valve to the motor vehicle part.

With the above described configuration, in use, the first and second fluid pumps are operated such that first fluid is allowed to flow through the fluid control valve to the surface of the motor vehicle part while second fluid is prevented from flowing through the fluid control valve. At this point, the second fluid is being pressurized by the second fluid pump, for example inside a pressure container. The first fluid pump is then shut down such that no first fluid flows through the fluid control valve while second fluid is being pressurized by the second fluid pump as stated above. A second fluid burst is then supplied to the surface of the motor vehicle part which may occur when no first fluid flows through the fluid control valve as second fluid has been pressurized enough in the pressure container.

As stated above, a pressure container may be provided for containing second fluid to be pressurized by the second fluid pump so as to cause the above mentioned burst of second fluid to be ejected to the surface of the motor vehicle part. The pressure container, when provided, is closed by the fluid control valve. Such pressure container may be a dedicated container, or be defined by an interior volume of a second fluid circuit by for example at least one pipe.

In one example, at least one of the first and second fluid outlets may comprise a nozzle that is configured to direct a fluid to a surface of a motor vehicle part as stated above, such as a fluid burst in the case of the second fluid.

A control unit, such as a vehicle electronic control unit, may be provided. The control unit may be configured for controlling the second fluid pump to continue supplying second fluid to the surface of the motor vehicle part after the burst of second fluid. Then, a continuous flow of second fluid is supplied to the surface of the motor vehicle part during a predetermined period of time. Said control unit may be also configured operating the first fluid pump and/or the second fluid pump at least during operation of the water pump.

The first fluid pump may be configured for supplying first fluid with a pressure higher or equal than the first fluid pressure. The second fluid pump may be configured for supplying second fluid with a pressure higher than or equal to the second channel pressure when the second fluid flows through the second channel, with the first fluid pressure being higher than the second fluid channel pressure plus the valve member pressure.

A first fluid tank may be further provided for containing first fluid to be pumped to the fluid control valve.

A method for washing a surface of a motor vehicle part using the above described device is also provided. The present washing method comprises operating the first fluid pump for causing a first fluid to flow through the first fluid channel of the fluid control valve with a first fluid pressure and out towards a surface of a motor vehicle part, closing the second fluid channel of the fluid control valve by the flow of first fluid through the first fluid channel of the fluid control valve, operating the second fluid pump for causing a second fluid to flow through the second fluid channel of the fluid control valve with a second fluid pressure into a pressure container causing the second fluid to be pressurized therein, shutting down the first fluid pump, preventing the first fluid from flowing through the first fluid channel of the fluid control valve, allowing the second fluid to flow through the second fluid channel of the fluid control valve resulting in a burst of said second fluid being supplied towards the surface of the motor vehicle part. Second fluid pump may be finally shut down into a non-operating state to complete washing process.

Both the first and second fluid pumps may be operated at the same time for example in a transient state between a state when first and second fluid pumps are not operated and a state when first and second fluid pumps are operated such as when the surface of a motor vehicle part is washed while the second fluid is being pressurized with the second fluid channel closed when the first fluid is flowing through the first channel. Since the second fluid is pressurized when no second fluid is required, pump operational time is optimized. The second fluid pump may be operated before the first fluid pump, or both the first and second fluid pumps may be operated simultaneously, or the second fluid pump may be operated after the first pump. In any case, it is important that both the first and second fluid pumps are operated simultaneously at a given time.

The first fluid is a liquid such as cleaning liquid or water and the second fluid is a gas such as air. The fluid control valve is a liquid-air valve wherein the first fluid channel is a liquid channel and the second fluid channel is an air channel. Also the first fluid pump is a liquid pump for supplying liquid from a liquid source to the fluid control valve and the second fluid pump is an air pump for supplying a flow of air, preferably a pressurized flow of air, from an air source to said fluid control valve. The air source may be from the environment, or be an air tank, etc. and it may be treated, pressurized, etc.

More in detail, and in view of the above preferred example, according to the present method for washing a surface of a motor vehicle part using the above described device, the following specific phases may be performed.

A washing phase may be performed where air pressure is built-up in the above mentioned pressure container as both the liquid pump and the air pump are in operation. The surface of the motor vehicle part, for example, a camera lens, is then washed by the liquid that is being supplied through liquid nozzle. Air flow through the air channel is blocked by liquid pressure in the liquid-air valve. Air pressure continues building-up in the pressure container during a pre-defined washing time period.

A fluid burst -phase may be performed where the air pump is still in operation and liquid pressure in the liquid-air valve drops and the air channel in the liquid-air valve opens such that pressurized air is suddenly released causing an air burst to be supplied to the surface of the motor vehicle part.

A drying phase may be performed where the air pump is still in operation and during a drying time period during which a continuous air flow is delivered to the surface of the motor vehicle part so that remaining humidity is removed therefrom.

A final phase may be performed where after washing and drying phases have been completed. The air pump is shut down after washing and drying time periods have been elapsed.

The present device and method for washing a surface of a motor vehicle part all involve a number of significant advantages. In the fluid burst -phase, liquid layer in the surface of the motor vehicle part is broken or displaced, and in the drying phase small drops already present in said surface are dried or removed by the continuous air flow. As a result, a more efficient cleaning of the surface of the motor vehicle part is provided, causing opening/rupture of a liquid layer on said surface while removing remaining humidity and water droplets.

Time required to remove liquids from a surface is highly reduced. Air pressure is built up during washing cycle as a result of which time is not wasted. Air bursts shorten the drying phase and they are released immediately at the end of the washing phase. This greatly reduces drying/water removal times so the interval during which the surface to be washed is obstructed, for example a camera lens, is greatly reduced.

This is of high importance specially when the part is a camera lens, where image may be distorted by water resulting in driver's vision or camera detection algorithm to be obstructed.

The present device and method are cost effective as compared to prior art solutions using expensive solenoid valves. The use of the above described fluid control valve also allows the device to work automatically without requiring controllers.

Furthermore, supplying air bursts and then continuous air flow has been found to be advantageous in drying/water removal of surfaces. The present device provides immediate cleaning of a surface and when remaining liquid or small drops are present thereon, they are efficiently and quickly removed by continuous air flow since the liquid layer and drops are already in movement by the initial air burst. Still at high altitudes, i.e. above sea level, where air density is lower, water removal/drying is performed very efficiently with the present device, fluid control valve, and method by combining water flow, air burst, and continuous air flow.

Finally, a very compact fluid control valve can be produced and thus a very compact device, which can be operated with low noise, low power consumption, and low heat generation by water pump with no cooling operation being required to avoid overheating.

### BRIEF DESCRIPTION OF THE DRAWINGS

Non-limiting examples of the present disclosure will be described in the following, with reference to the appended drawings, in which:
Figure 1 is a general perspective view of one example of the device for washing a surface of a motor vehicle part;
Figure 2 is a general isometric view of one example of a fluid control valve that is provided in the device shown in figure 1;
Figure 3 is a sectional view of the fluid control valve in figure 2, shown in a default state; and
Figure 4 is a sectional view of the fluid control valve in figure 2, shown in an operating state.

### DETAILED DESCRIPTION OF EXAMPLES

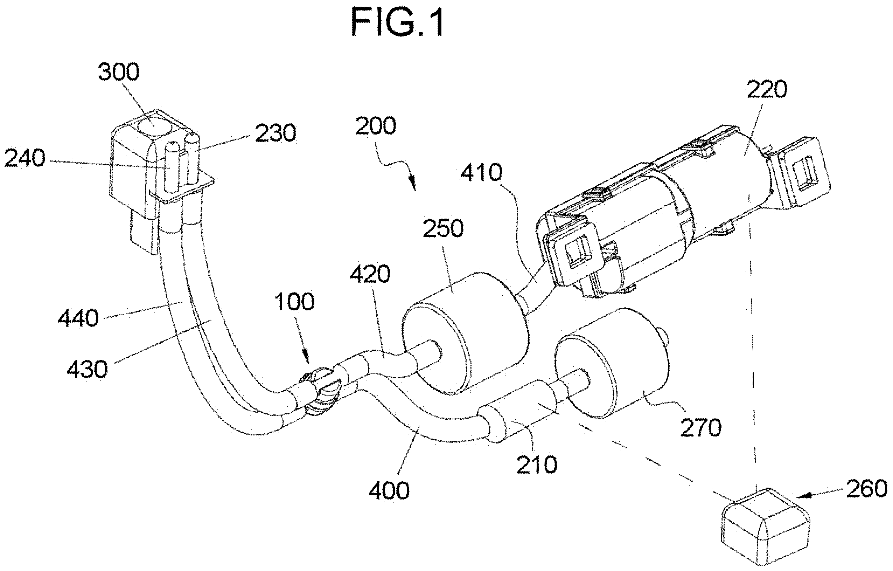

According to the drawings in figures 1-4, one example of a device 200 for washing a surface of a motor vehicle part 300 is shown. In the example shown, the motor vehicle part is a camera lens 300.

Referring to figure 1, a first fluid pump 210 is provided for supplying first fluid, water hereinafter, from a water source 270 to a fluid control valve, air-water control valve 100 hereinafter, through a first pipe 400.

A second fluid pump 220 is also provided for supplying second fluid, air hereinafter, from an air source, not shown, through a second pipe 410 to a pressure container 250, which will be described further below, and hence to the air-water control valve 100, through a third pipe 420.

Unless otherwise indicated, pressure refers to pressure values in the fluid control valve. Supply pressure values in fluid pump are usually higher than or equal to those in fluid control valve.

A first fluid nozzle 240 is provided for supplying water from the air-water control valve 100 to the motor vehicle part 300 through fourth pipe 440. A second fluid nozzle 230 is also provided for supplying air from the air-water control valve 100 to the motor vehicle part 300 through fifth pipe 430. Fluid nozzles 240, 230 may be made integral with the vehicle part.

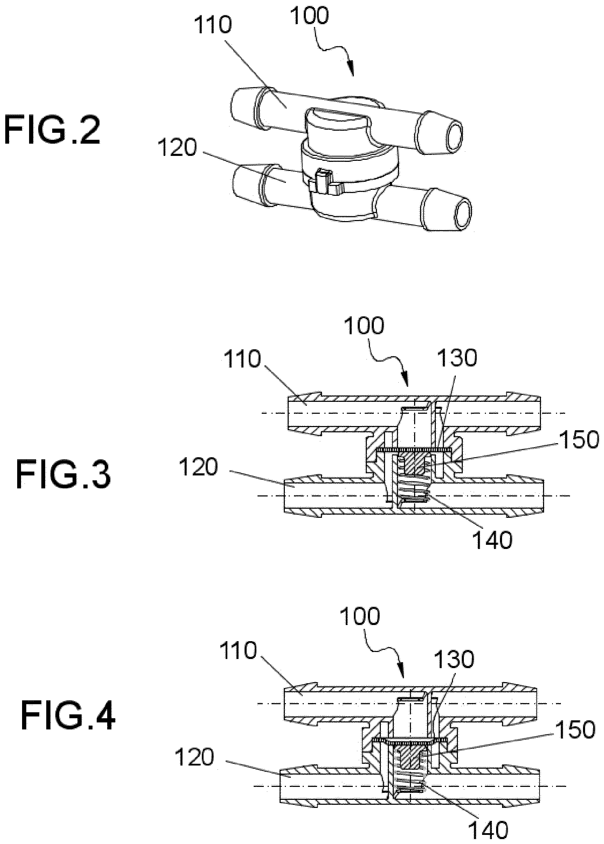

Referring to figures 3 and 4 of the drawings, the air-water control valve 100 is configured as a four-way valve comprising a water channel 110 and an air channel 120 that is separate from the water channel 110, that is, both channels 110, 120 are configured as independent fluid channels. The water channel 110 is formed in an air-water control valve body and it may define an area referred to as controller side. The air channel 120 is also formed in the air-water control valve body and it may define an area referred to as supply side.

The air-water control valve 100 is fluidly connected to first and third pipes 400, 420, on one side, and to the above mentioned fourth and fifth pipes 440, 430, on the other side. The fourth pipe 440 leads to water nozzle 240 while the fifth pipe 430 leads to air nozzle 230. The air-water control valve 100 also comprises a valve member 130. The valve member in the example shown is configured as a membrane 130. The membrane 130 may be made for example of rubber or any other similar material capable for opening or closing the water channel 110 and the air channel 120 when deformed, i.e. when bent, depending on fluid flowing through the air-water control valve 100. Membrane 130 is configured such that its deformation or bending under pressure built-up on both sides of the air channel 120 causes the air circuit to close in only few milliseconds, with air escape being negligible if any. The membrane 130 is made so as to prevent leakages and water backflow.

The air-water control valve 100 is thus operable at least into two different positions of the membrane 130. The air-water control valve 100 is operable into a closed position of the membrane 130 where the air channel 120 is closed when water is flowing through the water channel 110 with a water pressure PA higher than a predetermined valve element pressure or cracking pressure PV plus a second fluid channel pressure PA'. The air-water control valve 100 is also operable into an open position of the membrane 130 where the water channel 110 is open when no water flows through the water channel 110 or when water flows with a water pressure PA lower than the cracking pressure PV plus the second fluid channel pressure PA'.

A compression spring 140 is fitted in the air-water control valve 100 for biasing the membrane 130 through a pusher 150 upwards in figures 3-4 so as to close the water channel 110 of the air-water control valve 100. While water pressure PA is lower than the cracking pressure PV plus second fluid channel pressure PA' water flow is stopped by membrane 130 and spring 140 acting as a check valve.

In this example, the cracking pressure PV in the air-water control valve 100 is lower than 2 bar, preferably 0.5 bar. In general, the water pressure may be of the order of 10 bar or less, preferably, 6 bar or less. Air pressure PA' in the air-water control valve 100 may be of the order of 4 bar or less, preferably, 0.1 - 2.5 bar. Other ranges of pressure values are still possible.

Figure 3 shows the air-water control valve 100 in a non-operating state where the water channel 110 is closed and the air channel 120 is open. Figure 4 shows the air-water control valve 100 in an operating state where the water channel 110 is open and the air channel 120 is closed as a result of the membrane 130 being deformed or bent by water flow.

As shown in figures 1 of the drawings, a pressure container 250 is provided for containing air to be pressurized by the air pump 220. In the example shown, a volume of the pressure container 250 is of 10-50 ml. A water tank 270 is provided for containing water to be pumped to the air-water control valve 100.

In use, the water pump 210 is operated for pumping water with a pressure higher than the above mentioned cracking pressure PV plus the second fluid channel pressure PA' causing membrane 130 to be deformed or bend (and/or even displaced) in a way that the water channel 110 of the air-water control valve 100 is open allowing water to flow therethrough and out towards a surface of a motor vehicle part 300 through water nozzle 240. Then, the air channel 120 of the air-water control valve 100 is closed by the flow of water through the water channel 110 of the air-water control valve 100. This causes air pump 220 to be operated pumping air to flow through the air channel 120 of the air-water control valve 100 with an air fluid pressure PA' into the pressure container 250 and the second and third pipes 410, 420. This causes air to be pressurized inside the pressure container 250 and the pipes between the air pump 220 and the air-water control valve 100. The water pump 210 is then shut down while the air pump 220 is still in operation. As a result, water is prevented from flowing through the water channel 110 of the air-water control valve 100, and water pressure PA' is lower than said cracking pressure PA plus the second fluid channel pressure PA'. Air is then allowed to flow through the air channel 120 of the air-water control valve 100 causing an air burst to be ejected towards the surface of the motor vehicle part 300 through air nozzle 230. Afterwards, a continuous air flow may be supplied by the air pump 220 that could still remain in operation during a given period of time after the water pump 210 is shut down. Water and air pumps 210, 220 are then shut down and membrane 130 returns back to an original, rest position. Air burst time may be of 0.1 - 0.5 sec.

A control unit, in this case, a vehicle electronic control unit (ECU), 260 is provided. The ECU 260 may be configured for controlling the air pump 220 to continue supplying the above mentioned continuous flow of air to the surface of the motor vehicle part 300, during a predetermined period of time, such as for example 10 sec. or less after said air burst has been supplied to the surface of the motor vehicle part 300. The ECU 260 may be also configured for operating the water pump 210 and/or the air pump 220 at least during operation of the water pump 210. Other control means such as timers may be used together with or as an alternative to the ECU 260.

A washing cycle time when water pump 210 is in operation may be of 0,3 - 5 sec. for example.

The scope of the present disclosure should not be limited by particular examples but should be determined only by a fair reading of the claims that follow. If reference signs related to drawings are placed in parentheses in a claim, they are solely for attempting to increase the intelligibility of the claim and shall not be construed as limiting its scope.

## Claims

1. A device (200) for washing a surface of a motor vehicle part (300), the device (200) comprising:
- a water pump (210) for supplying water from a water source to an air-water control valve (100);
- an air pump (220) for supplying a flow of an air from an air source to an air-water control valve (100);
- at least one water outlet (230) for supplying water from the air-water control valve (100) to the motor vehicle part (300); and
- at least one air outlet (240) for supplying air from the air-water control valve (100) to the motor vehicle part (300),
wherein the air-water control valve (100) comprises at least one water channel (110) and at least one air channel (120) separate from the water channel (110), wherein the air-water control valve (100) further comprises a valve member (130) configured to be driven into a closed position closing the air channel (120) when water flows through the water channel (110) with a water pressure (PA) higher than a predetermined valve member pressure (PV) plus an air channel pressure (PA') or into an open position opening the air channel (120) when no water flows through the water channel (110) or when water flows with a water pressure (PA) lower than the predetermined valve member pressure (PV) plus the air channel pressure (PA'), and biasing means (140) for biasing the valve member (130) for closing the water channel (110),
wherein, in use, the water pump (210) and the air pump (220) are operated such that water is allowed to flow through the air-water control valve (100) to the surface of the motor vehicle part (300) while air is prevented from flowing through the air-water control valve (100), with the air pump in operation while the water pump (220) is shut down such that no water flows through the air-water control valve (100) and an air burst is supplied to the surface of the motor vehicle part (300),
**characterized in that** the valve member (130) is a membrane made of rubber or any other similar material capable for opening or closing the water channel (110) and the air channel (120) when deformed depending on fluid flowing through the air-water control valve (100).

2. The device (200) of claim 1, wherein the predetermined valve member pressure (PV) is lower than 2 bar.

3. The device (200) of any of the preceding claims, wherein the amount of said valve member pressure (PV) is greater than or equal to a force applied by the biasing means (140) for biasing the valve member (130) for opening the water channel (110).

4. The device (200) of any of the preceding claims, wherein the biasing means comprise a compression spring (140) fitted in the air-water control valve (100) for biasing the membrane (130) through a pusher (150) to close the water channel (110) of the air-water control valve (100).

5. The device (200) of any of the preceding claims, wherein it comprises a pressure container (250) for containing air pressurized by the air pump (220).

6. The device (200) of any of claim 5, wherein the pressure container (250) is a dedicated container, or the pressure container (250) is defined by an interior volume of an air circuit, or the pressure container (250) is defined by at least one pipe.

7. The device (200) of any of the preceding claims, wherein at least one of the water outlet (230) and the air outlet (240) comprises a nozzle that is configured to direct a fluid burst to a surface of a motor vehicle part (300).

8. The device (200) of any of the preceding claims, wherein it further comprises a control unit (260) configured such that after an air burst has been supplied to the surface of the motor vehicle part (300), a continuous flow of air is supplied to the surface of the motor vehicle part (300) during a predetermined period of time.

9. The device (200) of claim 8, wherein the control unit is configured for operating the air pump (220) at least during operation of the water pump (210).

10. The device (200) of any of the preceding claims, wherein the water pump (210) is configured for supplying water with a pressure higher or equal than the water pressure (PA) and the air pump (220) is configured for supplying air with an air pressure (PA') higher or equal than the second channel pressure (PA') when the air flows through the second channel, the water pressure (PA) being higher than the air channel pressure (PA') plus the valve member pressure (PV).

11. The device (200) of any of the preceding claims, wherein it further comprises a water tank (270) for containing water to be pumped to the air-water control valve (100).

12. Method for washing a surface of a motor vehicle part (300) using the device (200) of any of the preceding claims, wherein the method comprises:
- operating the water pump (210) for causing a water to flow through the water channel (110) of the air-water control valve (100) with a water pressure (PA) and out towards a surface of a motor vehicle part (300);
- closing the air channel (120) of the air-water control valve (100) by the flow of water through the water channel (110) of the air-water control valve (100);
- operating the air pump (220) for causing an air to flow through the air channel (120) of the air-water control valve (100) with an air pressure (PA') into a pressure container (250) causing the air to be pressurized therein;
- shutting down the water pump (210);
- preventing the water from flowing through the water channel (110) of the air-water control valve (100) or reducing the water pressure (PA) lower than the predetermined valve member pressure (PV) plus the air channel pressure (PA');
- allowing the air to flow through the air channel (120) of the air-water control valve (100) resulting in a burst of said air being supplied towards the surface of the motor vehicle part (300).

## Patentansprüche

1. Eine Vorrichtung (200) zum Waschen einer Oberfläche eines Kraftfahrzeugteils (300), wobei die Vorrichtung (200) Folgendes umfasst:
- eine Wasserpumpe (210) zum Zuführen von Wasser von einer Wasserquelle zu einem Luft-Wasser-Steuerventil (100);
- eine Luftpumpe (220) zum Zuführen eines Luftstroms von einer Luftquelle zu einem Luft-Wasser-Steuerventil (100);
- mindestens einen Wasserauslass (230) zum Zuführen von Wasser von dem Luft-Wasser-Steuerventil (100) zu dem Kraftfahrzeugteil (300); und
- mindestens einen Luftauslass (240) zum Zuführen von Luft von dem Luft-Wasser-Steuerventil (100) zu dem Kraftfahrzeugteil (300),
wobei das Luft-Wasser-Steuerventil (100) Folgendes umfasst: mindestens einen Wasserkanal (110) und mindestens einen Luftkanal (120) getrennt von dem Wasserkanal (110), wobei das Luft-Wasser-Steuerventil (100) ferner ein Ventilelement (130) umfasst, das konfiguriert ist, um in eine geschlossene Position getrieben zu werden, in der der Luftkanal (120) geschlossen wird, wenn Wasser durch den Wasserkanal (110) mit einem Wasserdruck (PA) fließt, der höher ist als ein vorbestimmter Ventilelementdruck (PV) plus einem Luftkanaldruck (PA'), oder in eine offene Position getrieben zu werden, in der der Luftkanal (120) geöffnet wird, wenn kein Wasser durch den Wasserkanal (110) fließt oder wenn Wasser mit einem Wasserdruck (PA) fließt, der niedriger ist als der vorbestimmte Ventilelementdruck (PV) plus dem Luftkanaldruck (PA'), und ein Vorspannmittel (140) zum Vorspannen des Ventilelements (130) zum Schließen des Wasserkanals (110),
wobei im Gebrauch die Wasserpumpe (210) und die Luftpumpe (220) so betrieben werden, dass Wasser durch das Luft-Wasser-Steuerventil (100) zur Oberfläche des Kraftfahrzeugteils (300) strömen kann, während Luft daran gehindert wird, durch das Luft-Wasser-Steuerventil (100) zu strömen, wobei die Luftpumpe in Betrieb ist, während die Wasserpumpe (220) abgeschaltet ist, so dass kein Wasser durch das Luft-Wasser-Steuerventil (100) strömt und ein Luftstoß an die Oberfläche des Kraftfahrzeugteils (300) geliefert wird,
**dadurch gekennzeichnet, dass** das Ventilelement (130) eine Membran aus Gummi oder einem anderen ähnlichen Material ist, das in der Lage ist, den Wasserkanal (110) und den Luftkanal (120) zu öffnen oder zu schließen, wenn es in Abhängigkeit von durch das Luft-Wasser-Steuerventil (100) fließendem Fluid verformt wird.

2. Die Vorrichtung (200) von Anspruch 1, wobei der vorbestimmte Ventilelementdruck (PV) niedriger als 2 bar ist.

3. Die Vorrichtung (200) von einem der vorhergehenden Ansprüche, wobei der Betrag des Ventilelementdrucks (PV) größer oder gleich einer Kraft ist, die durch das Vorspannmittel (140) zum Vorspannen des Ventilelements (130) zum Öffnen des Wasserkanals (110) ausgeübt wird.

4. Die Vorrichtung (200) von einem der vorhergehenden Ansprüche, wobei das Vorspannmittel eine Druckfeder (140) umfasst, das in das Luft-Wasser-Steuerventil (100) eingepasst ist, um die Membran (130) durch einen Schieber (150) vorzuspannen, um den Wasserkanal (110) des Luft-Wasser-Steuerventils (100) zu schließen.

5. Die Vorrichtung (200) von einem der vorhergehenden Ansprüche, wobei sie einen Druckbehälter (250) zum Aufnehmen von Luft umfasst, die von der Luftpumpe (220) mit Druck beaufschlagt worden ist.

6. Die Vorrichtung (200) von einem von Anspruch 5, wobei der Druckbehälter (250) ein dedizierter Behälter ist oder der Druckbehälter (250) durch ein Innenvolumen eines Luftkreislaufs definiert ist, oder der Druckbehälter (250) durch mindestens ein Rohr definiert ist.

7. Die Vorrichtung (200) von einem der vorhergehenden Ansprüche, wobei mindestens einer von dem Wasserauslass (230) und dem Luftauslass (240) eine Düse umfasst, die konfiguriert ist, um einen Fluidstoß auf eine Oberfläche eines Kraftfahrzeugteils (300) zu richten.

8. Die Vorrichtung (200) von einem der vorhergehenden Ansprüche, wobei sie ferner eine Steuereinheit (260) umfasst, die so konfiguriert ist, dass, nachdem ein Luftstoß der Oberfläche des Kraftfahrzeugteils (300) zugeführt worden ist, ein kontinuierlicher Luftstrom der Oberfläche des Kraftfahrzeugteils (300) während einer vorbestimmten Zeitdauer zugeführt wird.

9. Die Vorrichtung (200) von Anspruch 8, wobei die Steuereinheit zum Betreiben der Luftpumpe (220) zumindest während des Betriebs der Wasserpumpe (210) konfiguriert ist.

10. Die Vorrichtung (200) von einem der vorhergehenden Ansprüche, wobei die Wasserpumpe (210) so konfiguriert ist, dass sie Wasser mit einem Druck zuführt, der höher oder gleich dem Wasserdruck (PA) ist, und die Luftpumpe (220) so konfiguriert ist, dass sie Luft mit einem Luftdruck (PA') zuführt, der höher oder gleich dem zweiten Kanaldruck (PA') ist, wenn die Luft durch den zweiten Kanal strömt, wobei der Wasserdruck (PA) höher ist als der Luftkanaldruck (PA') plus dem Ventilelementdruck (PV).

11. Die Vorrichtung (200) von einem der vorhergehenden Ansprüche, wobei sie ferner einen Wassertank (270) zum Aufnehmen von Wasser umfasst, das zu dem Luft-Wasser-Steuerventil (100) gepumpt werden soll.

12. Verfahren zum Waschen einer Oberfläche eines Kraftfahrzeugteils (300) unter Verwendung der Vorrichtung (200) von einem der vorhergehenden Ansprüche, wobei das Verfahren Folgendes umfasst:
- Betreiben der Wasserpumpe (210), um zu bewirken, dass Wasser durch den Wasserkanal (110) des Luft-Wasser-Steuerventils (100) mit einem Wasserdruck (PA) und nach außen in Richtung zu einer Oberfläche eines Kraftfahrzeugteils (300) fließt;
- Schließen des Luftkanals (120) des Luft-Wasser-Steuerventils (100) durch den Wasserstrom durch den Wasserkanal (110) des Luft-Wasser-Steuerventils (100);
- Betreiben der Luftpumpe (220), um zu bewirken, dass eine Luft durch den Luftkanal (120) des Luft-Wasser-Steuerventils (100) mit einem Luftdruck (PA') in einen Druckbehälter (250) strömt, wodurch bewirkt wird, dass die Luft darin mit Druck beaufschlagt wird;
- Abschalten der Wasserpumpe (210);
- Verhindern, dass das Wasser durch den Wasserkanal (110) des Luft-Wasser-Steuerventils (100) fließt, oder Reduzieren des Wasserdrucks (PA), der niedriger als der vorbestimmte Ventilelementdruck (PV) plus dem Luftkanaldruck (PA') ist;
- Zulassen, dass die Luft durch den Luftkanal (120) des Luft-Wasser-Steuerventils (100) strömt, was dazu führt, dass ein Stoß der Luft in Richtung zur Oberfläche des Kraftfahrzeugteils (300) zugeführt wird.

## Revendications

1. Un dispositif (200) pour laver une surface d'une pièce de véhicule à moteur (300), le dispositif (200) comprenant :
- une pompe à eau (210) pour fournir de l'eau à partir d'une source d'eau à une soupape de commande d'air-eau (100) ;
- une pompe à air (220) pour fournir un flux d'un air d'une source d'air à une soupape de commande d'air-eau (100) ;
- au moins une sortie d'eau (230) pour fournir de l'eau à partir de la soupape de commande d'air-eau (100) à la pièce de véhicule à moteur (300) ; et
- au moins une sortie d'air (240) pour fournir de l'air à partir de la soupape de commande d'air-eau (100) à la pièce de véhicule à moteur (300),
dans lequel la soupape de commande d'air-eau (100) comprend au moins un canal d'eau (110) et au moins un canal d'air (120) séparé du canal d'eau (110), dans lequel la soupape de commande d'air-eau (100) comprend en outre un élément de soupape (130) configuré pour être entraîné dans une position fermée fermant le canal d'air (120) lorsque de l'eau s'écoule à travers le canal d'eau (110) avec une pression d'eau (PA) supérieure à une pression d'élément de soupape prédéterminée (PV) plus une pression de canal d'air (PA') ou dans une position ouverte ouvrant le canal d'air (120) lorsqu'aucune eau ne s'écoule à travers le canal d'eau (110) ou lorsque de l'eau s'écoule avec une pression d'eau (PA) inférieure à la pression d'élément de soupape prédéterminée (PV) plus la pression de canal d'air (PA'), et un moyen de sollicitation (140) pour solliciter l'élément de soupape (130) pour fermer le canal d'eau (110),
dans lequel, lors de son emploi, la pompe à eau (210) et la pompe à air (220) sont actionnées de telle sorte que de l'eau peut s'écouler à travers la soupape de commande d'air-eau (100) vers la surface de la pièce de véhicule à moteur (300) alors que de l'air est empêché de s'écouler à travers la soupape de commande d'air-eau (100), avec la pompe à air en fonctionnement alors que la pompe à eau (220) est arrêtée de telle sorte qu'aucune eau ne s'écoule à travers la soupape de commande d'air-eau (100) et qu'une rafale d'air est fournie à la surface de la pièce de véhicule à moteur (300),
**caractérisé en ce que** l'élément de soupape (130) est une membrane réalisée en caoutchouc ou en tout autre matériau similaire capable d'ouvrir ou de fermer le canal d'eau (110) et le canal d'air (120) lorsqu'il est déformé en fonction du fluide s'écoulant à travers la soupape de commande d'air-eau (100).

2. Le dispositif (200) de la revendication 1, dans lequel la pression de l'élément de soupape prédéterminé (PV) est inférieure à 2 bars.

3. Le dispositif (200) de l'une quelconque des revendications précédentes, dans lequel la quantité de ladite pression d'élément de soupape (PV) est supérieure ou égale à une force appliquée par le moyen de sollicitation (140) pour solliciter l'élément de soupape (130) pour ouvrir le canal d'eau (110).

4. Le dispositif (200) de l'une quelconque des revendications précédentes, dans lequel le moyen de sollicitation comprend un ressort de compression (140) monté dans la soupape de commande d'air-eau (100) pour solliciter la membrane (130) à travers un poussoir (150) pour fermer le canal d'eau (110) de la soupape de commande d'air-eau (100).

5. Le dispositif (200) de l'une quelconque des revendications précédentes, dans lequel il comprend un récipient sous pression (250) destiné à contenir de l'air pressurisé par la pompe à air (220).

6. Le dispositif (200) de l'une quelconque de la revendication 5, dans lequel le récipient sous pression (250) est un récipient dédié, ou le récipient sous pression (250) est défini par un volume intérieur d'un circuit d'air, ou le récipient sous pression (250) est défini par au moins un tuyau.

7. Le dispositif (200) de l'une quelconque des revendications précédentes, dans lequel au moins l'une de la sortie d'eau (230) et de la sortie d'air (240) comprend une buse qui est configurée pour diriger un jaillissement de fluide à une surface d'une pièce de véhicule à moteur (300).

8. Le dispositif (200) de l'une quelconque des revendications précédentes, dans lequel il comprend en outre une unité de commande (260) configurée de telle sorte qu'après qu'une rafale d'air a été fournie à la surface de la pièce de véhicule à moteur (300), un écoulement continu d'air est fourni à la surface de la pièce de véhicule à moteur (300) pendant une période de temps prédéterminée.

9. Le dispositif (200) de la revendication 8, dans lequel l'unité de commande est configurée pour faire fonctionner la pompe à air (220) au moins pendant le fonctionnement de la pompe à eau (210).

10. Le dispositif (200) de l'une quelconque des revendications précédentes, dans lequel la pompe à eau (210) est configurée pour fournir de l'eau avec une pression supérieure ou égale à la pression d'eau (PA) et la pompe à air (220) est configurée pour fournir de l'air avec une pression d'air (PA') supérieure ou égale à la seconde pression de canal (PA') lorsque l'air s'écoule à travers le second canal, la pression d'eau (PA) étant supérieure à la pression de canal d'air (PA') plus la pression d'élément de soupape (PV).

11. Le dispositif (200) de l'une quelconque des revendications précédentes, dans lequel il comprend en outre un réservoir d'eau (270) destiné à contenir de l'eau à pomper vers la soupape de commande d'air-eau (100).

12. Procédé de lavage d'une surface d'une pièce de véhicule à moteur (300) à l'aide du dispositif (200) de l'une quelconque des revendications précédentes, dans lequel le procédé comprend :
- faire fonctionner la pompe à eau (210) pour amener une eau à s'écouler à travers le canal d'eau (110) de la soupape de commande d'air-eau (100) avec une pression d'eau (PA) et vers l'extérieur vers une surface d'une pièce de véhicule à moteur (300) ;
- fermer le canal d'air (120) de la soupape de commande d'air-eau (100) par l'écoulement d'eau à travers le canal d'eau (110) de la soupape de commande d'air-eau (100) ;
- faire fonctionner la pompe à air (220) pour amener un air à s'écouler à travers le canal d'air (120) de la soupape de commande d'air-eau (100) avec une pression d'air (PA') dans un récipient sous pression (250) amenant l'air à être pressurisé à l'intérieur ;
- arrêter la pompe à eau (210) ;
- empêcher l'eau de s'écouler à travers le canal d'eau (110) de la soupape de commande d'air-eau (100) ou réduire la pression d'eau (PA) inférieure à la pression d'élément de soupape prédéterminée (PV) plus la pression de canal d'air (PA') ;
- permettre à l'air de s'écouler à travers le canal d'air (120) de la soupape de commande d'air-eau (100), ce qui a pour résultat qu'une rafale dudit air est fournie vers la surface de la pièce de véhicule à moteur (300).
